# EUROPÄISCHE PATENTSCHRIFT

(11) **EP 0 399 266 B1**
(45) Veröffentlichungstag und Bekanntmachung des Hinweises auf die Patenterteilung: **22.06.1994**
(21) Anmeldenummer: 90108488.9
(22) Anmeldetag: 05.05.1990
(51) Int. Cl.: B01F 3/08, B01F 3/12, B01F 5/04, B01F 5/06, A61K 7/00

(54) **Herstellung kugelförmiger Dispersionen durch Kristallisation von Emulsionen**
Manufacture of spherical dispersions through crystallistion of emulsions
Préparaton de dispersiones sphérique par cristallisation d'émulsiones

(30) Priorität: 20.05.1989 DE 3916465
(43) Veröffentlichungstag der Anmeldung: 28.11.1990
(73) Patentinhaber: BAYER AG, 51368 Leverkusen (DE)
(72) Erfinder: Klinksiek, Bernd, Dipl.-Ing., D-5060 Bergisch-Gladbach 1 (DE); Kalz, Dietmar, Dr., D-5206 Neunkirchen-Seelscheid 1 (DE); Gerdes, Carsten, Dr., D-5090 Leverkusen (DE); Kümmeler, Ferdinand, Dipl.-Ing., D-5090 Leverkusen (DE); Heinrich, Gunter, Dr., D-5090 Leverkusen (DE); Reizlein, Karl, Dr., D-5000 Koeln 80 (DE); Zimmermann, Manfred, Dr., D-4019 Monheim (DE)

(56) Entgegenhaltungen:
- EP-A- 0 101 007
- EP-A- 0 221 465
- DE-A- 1 519 834
- US-A- 3 635 834

## Beschreibung

Die Erfindung geht aus von einem Verfahren zur Herstellung einer feinteiligen Kristallsuspension, bei dem eine Schmelze mit einer kälteren flüssigen Phase bei einer Temperatur unterhalb des Kristallisationspunktes vermischt und darin emulgiert wird, wobei die Schmelze erst nach der Emulgierung in Form der dispergierten Partikel erstarrt.

Üblicherweise werden Schmelzen so dispergiert, daß die Schmelze zunächst oberhalb der Verfestigungstemperatur dispergiert und dann unter die Kristallisationstemperatur abgekühlt wird. Die Abkühlung kann in einem Rührkessel, durch Wärmeaustauscher oder durch die flüssige Phase selbst erfolgen (siehe z.B. EP-A-221 465).
Ein auf diesem Prinzip beruhendes Dispergierverfahren wird auch in DE-A-1 519 834 beschrieben. Die Dispergierung erfolgt in diesem Falle in zwei Stufen. In der ersten Stufe wird eine heiße Schmelze zur Bildung einer Voremulsion in eine flüssige Phase (Trägerflüssigkeit) eingedüst, deren Temperatur mindestens so hoch ist wie die Schmelzetemperatur. Die aus den geschmolzenen Feststoffen und der erhitzten Trägerflüssigkeit bestehende Voremulsion wird dann in einer Hochdruck-Homogenisiereinrichtung fein dispergiert. Die fertige Emulsion wird anschließend abgekühlt, um die dispergierten Teilchen zu verfestigen.
Nachteilig bei diesen Verfahren ist, daß aus den dispergierten Partikeln größere Kristalle wachsen. Es ist auch bereits bekannt, daß man eine Schmelze in einer wäßrigen Phase mit einer Temperatur unterhalb der Verfestigungstemperatur der Schmelze dispergieren kann. In der DE-C-2 551 841 und 29 00 268 wird z.B. beschrieben, wie solche Dispersionen mit schnell-laufenden Rührern bzw. Rotor/Stator-Maschinen hergestellt werden. Nachteilig bei diesen Verfahren ist, daß nur sehr grobteilige Dispersionen entstehen, die nicht lagerstabil sind. Um stabile Dispersionen zu erhalten, sind entweder gerührte Lagertanks (DE-C-29 00 268), die Zugabe von Verdickungsmitteln oder eine weitere Homogenisierstufe (DE-C-2 551 841), wie z.B. Rührwerkskugelmühlen notwendig.

Der Erfindung liegt die Aufgabe zugrunde, das oben beschriebene Emulsions-Kristallisationsverfahren in der Weise weiter zu entwickeln und zu verbessern, daß sehr feinteilige Kristallsuspensionen mit kugelförmigen Teilchen (Teilchendurchmesser ≦1 »m) mit hohen Durchsätzen wirtschaftlich hergestellt werden können.

Diese Aufgabe wird erfindungsgemäß dadurch gelöst, daß die Schmelze zur Bildung einer Voremulsion in die flüssige Phase eingedüst wird und die Voremulsion innerhalb einer Verweilzeit von 0,005 s bis 0,15 s, vorzugsweise 0,01 s bis 0,1 s, nach der Eindüsung in einer nachgeschalteten Homogenisierdüse zu einer Emulsion feindispergiert wird, die anschließend zur fertigen Kristallsuspension erstarrt. Insbesondere wird nach der Erfindung die Verweilzeit beim Emulgierungsvorgang so klein gehalten, daß die Emulgierung abgeschlossen ist, solange die Schmelze noch flüssig und niedrigviskos ist. Bei längeren Verweilzeiten wurde beobachtet, daß relativ grobteilige hochviskose Dispersionen entstehen, die nicht lagerstabil sind.

Aufgrund der kurzen Verweilzeit in der Emulgierstufe kann die Emulgierung bei sehr niedrigen Temperaturen erfolgen, die weit unterhalb der Kristallisationstemperatur liegen. Die Abkühlung der dispergierten Partikel erfolgt dadurch so schnell, daß die kugelförmige Partikelform erhalten bleibt. Die Emulgierung geht also schneller vonstatten als die Abkühlung. Ferner wird durch die tiefe Temperatur die Löslichkeit der Schmelze in der Flüssigkeit erheblich abgesenkt.

Vorzugsweise wird die Schmelze unmittelbar vor der Homogenisierdüse in die flüssige Phase eingedüst. Als Homogenisierdüse wird zweckmäßig ein Strahldispergator mit einer Vielzahl von Bohrungen verwendet.

Es wurde ferner gefunden, daß die Partikelgröße über den Vordruck beim Eindüsen der Schmelze gezielt eingestellt werden kann. Je größer der Vordruck ist, desto feinteiliger wird die Emulsion.

Wie schon erwähnt, muß die resultierende Mischtemperatur nach dem Eindüsen der Schmelze in die flüssige Phase unter der Erstarrungstemperatur der Schmelze liegen. Falls diese Bedingung nicht a priori erfüllt ist, kann das erfindungsgemäße Verfahren vorteilhaft in der Weise abgewandelt werden, daß ein Teil der Kristallsuspension rezirkuliert, gekühlt und im Kreislauf durch die Emulgierzone gefahren wird. Auf diese Weise wird der obengenannten Bedingung wieder Rechnung getragen.

Mit der Erfindung werden folgende Vorteile erzielt:
- Es können in einem Verfahrensschritt niedrigviskose Kristallsuspensionen mit kugelförmigen Teilchen hergestellt werden.
- Es können sehr hohe Durchsätze unter wirtschaftlichen Bedingungen realisiert werden.
- Man erhält sehr feinteilige Dispersionen mit einer engen Teilchengrößenverteilung. Dabei ergeben sich im Vergleich zu der bisher angewandten Rotor/Stator-Dispergierung wesentlich feinteiligere Dispersionen. Der Zusatz von Verdickungsmitteln ist nicht mehr notwendig.
- Die Partikelgröße kann eindeutig und reproduzierbar über den Düsenvordruck beim Emulgieren eingestellt werden.
- Das Verfahren kann erfolgreich zur Herstellung von hochkonzentrierten Dispersionen aus hochschmelzenden organischen Schmelzen eingesetzt werden.

Im folgenden wird das erfindungsgemäße Verfahren anhand von Zeichnungen und Ausführungsbeispielen näher erläutert. Es zeigen:
- Fig. 1: ein Verfahrensschema,
- Fig. 2: die Dispergiervorrichtung mit Schmelzeeindüsung und Homogenisierstufe,
- Fig. 3: eine nach dem gleichen Prinzip (wie in Fig. 2) arbeitende Dispergiervorrichtung, bei der die Schmelze unmittelbar vor der Homogenisierstufe eingedüst wird.

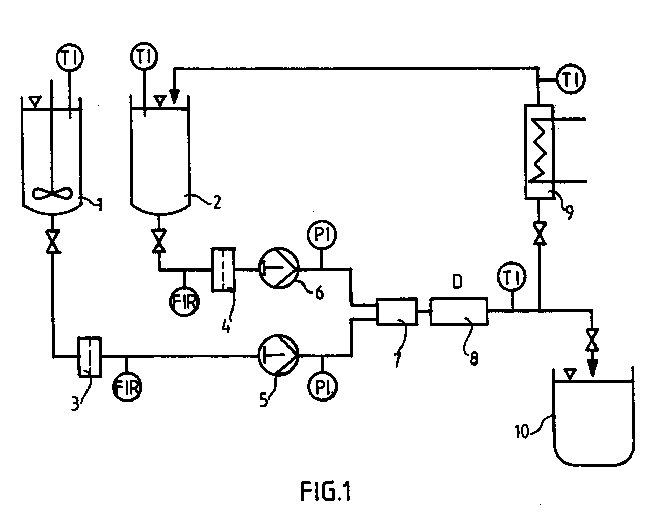

Gemäß Fig. 1 werden Schmelze und Flüssigkeit aus den Vorlagen 1 und 2 über die Filter 3 und 4 mittels der Dosierpumpen 5 und 6 kontinuierlich der Mischdüse 7 und der nachgeschalteten Homogenisierdüse 8 zugeführt. Der notwendige Misch- und Homogenisierdruck wird durch die Pumpen aufgebracht. Das Mischungsverhältnis von Schmelze und Flüssigkeit wird so gewahlt, daß die resultierende Mischtemperatur kleiner ist als die Erstarrungstemperatur der Schmelze. Für den Fall, daß diese Bedingung nicht a priori erfüllt werden kann, muß zumindest ein Teil der Dispersion über einen Kühler 9 in den Flüssigkeitsbehälter 2 rezirkuliert werden. Außerdem sind Temperaturregler TI, Druckregler PI und Mengenstrommeßgeräte FIR vorgesehen. Die aus der Homogenisierdüse 8 austretende Emulsion wird so lange nachgekühlt, bis die Schmelze in Form der dispergierten Kügelchen erstarrt ist. Die fertige Kristallsuspension wird in den Tank 10 abgeführt.

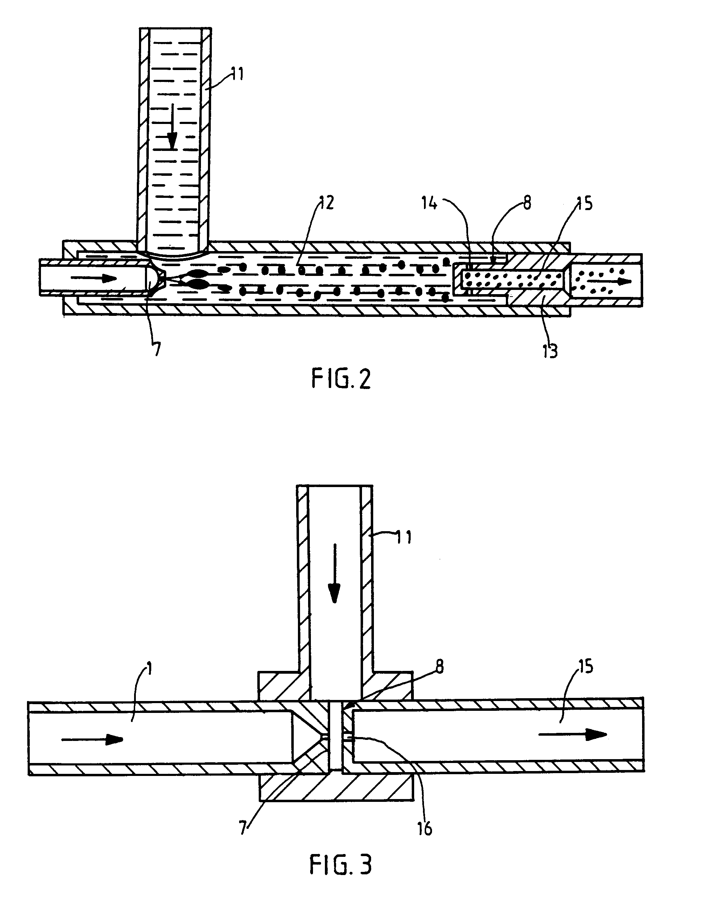

Gemäß Fig. 2 wird die Schmelze durch die Düse 7 in die auf gleicher Höhe seitlich zugeführte flüssige Phase (Stutzen) 11 eingedüst. Dadurch wird eine Voremulsion 12 erzeugt, die nach einer sehr kurzen Verweilzeit <0,1 s in die Homogenisierdüse 8 eintritt. Als Homogenisierdüse wird hier ein Strahldispergator verwendet, der aus einem axialen, stromaufwärts geschlossenen Rohr 13 mit einer Vielzahl von radialen Bohrungen 14 besteht. Im Strahldispergator wird die Voremulsion 12 zu der feinteiligen Emulsion 15 dispergiert. Die Verweilzeit der Voremulsion zwischen Mischdüse 7 und Strahldispergator 8 ist so kurz, daß auf dieser Strecke noch keine Erstarrung der Schmelzepartikel erfolgt. Die Erstarrung setzt vielmehr erst nach dem Strahldispergator ein und geht so schnell vonstatten, daß die Kugelform der Emulsionspartikel erhalten bleibt. Der Aufbau und die Funktion eines Strahldispergators sind in der DE-A-32 30 789 (EP-A-0 101 007) näher beschrieben.

Bei der in Fig. 3 dargestellten Dispergiervorrichtung sind die Emulgierstufe (Mischdüse 7 und die Homogenisierdüse 8) in Form einer axialen Bohrung 16 unmittelbar hintereinandergeschaltet. Ihr Abstand beträgt nur wenige Millimeter. Diese Vorrichtung ist prädestiniert, wenn besonders kurze Verweilzeiten der Voremulsion erreicht werden sollen.

Das erfindungsgemäße Verfahren eignet sich insbesondere zur Herstellung von hochkonzentrierten feinteiligen Dispersionen aus hochschmelzenden organischen Verbindungen. Voraussetzung ist dabei allerdings, daß sich die Schmelze nicht in der flüssigen Phase löst oder mit ihr eine homogene Mischphase bildet. Zur Verbesserung der Emulgierfähigkeit können der Schmelze bzw. der flüssigen Phase in bekannter Weise Emulgatoren zugesetzt werden.

### Beispiel 1

Mit der Anlage gemäß Fig. 1 und der Dispergiervorrichtung gemäß Fig. 2 wurde eine Paraffin-Wasser-Suspension in folgender Weise hergestellt:
In den Behälter 1 wurden 30 Teile Paraffinschmelze bei einer Temperatur von 120°C und im Behälter 2 70 Teile Wasser mit einer Temperatur von 60°C vorgelegt. Die Paraffinschmelze hatte folgende Zusammensetzung:
75,2 T Hartparaffin EH 100 der Fa. Hüls
12,73 T Emulgator aus einem teilvernetzten Behensäure-Fettsäureamid,
4,29 T Emulgator aus Dobanol 23® mit 4 Mol Ethylenoxid,
6,79 T Emulgator aus Nonylphenol mit 12 Mol Ethylenoxid,
0,99 T Eisessig.

Der Durchmesser der Misch- bzw. Emulgierdüse 7 betrug 0,6 mm, der Durchmesser der Bohrungen 14 im Strahldispergator 0,75 mm. Die Paraffinschmelze wurde der Mischdüse 7 mit einem Vordruck von 30 bar und einem Massenstrom von 46 kg/h und die flüssige Phase (Wasser) mit einem Vordruck von 12 bar und einem Massenstrom von 88 kg/h mittels der Dosierpumpen 5 und 6 zugeführt. Die Verweilzeit in der Emulgierzone betrug ca. 0,1 s. Nach der Feindispergierung erstarrte die Emulsion zu einer Kristallsuspension kugelförmiger Partikel mit einem mittleren Durchmesser von ca. 0,5 »m. Durch geeignete Wahl des Vordrucks an der Mischdüse 7 konnte der mittlere Teilchendurchmesser im Bereich von 0,2 »m bis 1 »m systematisch variiert bzw. gesteuert werden.

### Beispiel 2

In dem Behälter 1 wird eine Schmelze aus 15 Teilen eines handelsüblichen Pflanzenschutzmittels mit der Bezeichnung Baytan®, 0,75 T Aerosil 300® (Handelsprodukt der Firma Degussa), 5,0 Teilen Emulgator, bestehend aus Phenol mit 27 Mol Ethylenoxid und 2,5 Teilen Emulgator, bestehend aus Stearylalkohol mit 50 Mol Ethylenoxid, bei einer Temperatur von 120°C, und im Behälter 2 71,75 T Wasser und 5,0 T einer 2 %igen wäßrigen Lösung eines Schutzkolloids mit der Bezeichnung Kelzan® (Handelsprodukt der Firma Kelco, USA) bei einer Temperatur von 2°C vorgelegt.

Der Durchmesser der Mischdüse 7 betrug 0,4 mm, der Durchmesser der Bohrung 16 (Fig. 3) betrug 0,6 mm. Die Schmelze wurde der Mischdüse 7 mit einem Vordruck von 65 bar und die flüssige Phase mit einem Vordruck von 50 bar mittels Kolbendosierpumpen 5 und 6 zugeführt. Die Verweilzeit in der Emulgierzone betrug ca. 0,01 s. Nach der Feindispergierung erstarrte die Emulsion zu einer dünnflüssigen Kristallsuspension kugelförmiger Partikel mit einer mittleren Teilchengröße von 1,2 »m. Die Mischtemperatur betrug 18°C. Nach einer Nachkühlzeit von 4 Stunden im Behälter 10 bei einer Temperatur <20°C entsteht eine Kälte- und warmlagerstabile Pflanzenschutzsuspension.

Bei Mischtemperaturen >20°C entstehen keine kugelförmigen Partikel, sondern Nadelkristalle.

Die Nachkühlung ist in diesem Fall erforderlich, damit auch das Innere der Partikel erstarrt und um eine nachträgliche Umkristallisation zu vermeiden.

## Patentansprüche

1. Verfahren zur Herstellung einer feinteiligen Kristallsuspension, bei dem eine Schmelze mit einer kälteren flüssigen Phase bei einer Temperatur unterhalb des Kristallisationspunktes der Schmelze vermischt und darin emulgiert wird, wobei die Schmelze erst nach der Emulgierung in Form der dispergierten Partikel erstarrt, dadurch gekennzeichnet, daß die Schmelze zur Bildung einer Voremulsion (12) in die flüssige Phase eingedüst wird und die Voremulsion (12) innerhalb einer Verweilzeit von 0,005 s bis 0,15 s, vorzugsweise 0,01 s bis 0,1 s, nach der Eindüsung in einer nachgeschalteten Homogenisierdüse (8) zu einer Emulsion (15) feindispergiert wird, die anschließend zur fertigen Kristallsuspension erstarrt.

2. Verfahren nach Anspruch 1, dadurch gekennzeichnet, daß die Schmelze unmittelbar vor der Homogenisierdüse (8) eingedüst wird.

3. Verfahren nach Anspruch 1 bis 2, dadurch gekennzeichnet, daß als Homogenisierdüse (8) ein Strahldispergator mit einer Vielzahl von Bohrungen (14) verwendet wird.

4. Verfahren nach Anspruch 1 bis 3, dadurch gekennzeichnet, daß die Partikelgröße über den Vordruck beim Eindüsen der Schmelze gezielt eingestellt wird.

5. Verfahren nach Anspruch 1 bis 4, dadurch gekennzeichnet, daß ein Teil der Kristallsuspension rezirkuliert, gekühlt und im Kreislauf durch die Emulgierzone gefahren wird.

## Claims

1. A process for preparing a finely divided crystal suspension, in which a melt is mixed with a cooler liquid phase at a temperature below the crystallisation point of the melt and emulsified therein, wherein the melt solidifies in the form of dispersed particles only after emulsification, characterised in that the melt is metered into the liquid phase to form a pre-emulsion (12) and the pre-emulsion (12) is finely dispersed within a residence time of 0.005 s to 0.15 s, preferably 0.01 s to 0.1 s, following introduction, in a subsequent homogenising nozzle (8) to give an emulsion (15) which is then solidified to give the final crystal suspension.

2. A process according to Claim 1, characterised in that the melt is introduced directly in front of the homogenising nozzle (8).

3. A process according to Claims 1 to 2, characterised in that a jet disperser with a number of orifices (14) is used as a homogenising nozzle (8).

4. A process according to Claims 1 to 3, characterised in that the particle size is purposefully set via the admission pressure when introducing the melt.

5. A process according to Claims 1 to 4, characterised in that some of the crystal suspension is recirculated, cooled and recycled through the emulsifying zone.

## Revendications

1. Procédé pour la production d'une suspension cristalline finement divisée, dans lequel une masse fondue est mélangée avec une phase liquide plus froide, à une température inférieure au point de cristallisation de la masse fondue, et y est émulsionnée, à l'occasion de quoi la masse fondue ne se solidifie sous forme de particules dispersées qu'après l'émulsification, caractérisé en ce que la masse fondue est injectée dans la phase liquide pour la formation d'une préémulsion (12), et, pendant un temps de séjour compris entre 0,005 s et 0,15 s, de préférence entre 0,01 s et 0,1 s après l'injection, la préémulsion (12) est dispersée finement dans une buse d'homogénéisation (8) placée en série, en une émulsion (15) qui se solidifie ensuite en suspension cristalline terminée.

2. Procédé selon la revendication 1, caractérisé en ce que la masse fondue est injectée immédiatement devant la buse d'homogénéisation (8).

3. Procédé selon les revendications 1 à 2, caractérisé en ce que, comme buse d'homogénéisation (8), un dispositif disperseur à jet avec une pluralité d'orifices (14) est utilisé.

4. Procédé selon les revendications 1 à 3, caractérisé en ce que la taille des particules est ajustée de manière ciblée par le biais de la pression lors de l'injection de la masse fondue.

5. Procédé selon les revendications 1 à 4, caractérisé en ce qu'une partie de la suspension cristalline est recyclée, refroidie et remise dans le circuit au niveau la zone d'émulsification.
